(19) Europäisches Patentamt
European Patent Office
Office européen des brevets

(11) **EP 4 012 476 A1**

(12) **DEMANDE DE BREVET EUROPEEN**

(43) Date de publication:
**15.06.2022 Bulletin 2022/24**

(21) Numéro de dépôt: **20306540.4**

(22) Date de dépôt: **10.12.2020**

(51) Classification Internationale des Brevets (IPC):
**G02B 21/00** (2006.01)   **G02B 27/58** (2006.01)

(52) Classification Coopérative des Brevets (CPC):
**G02B 21/0072; G02B 21/0032; G02B 21/0048;
G02B 21/008; G02B 21/082; G02B 27/58**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeurs:
• **Centre National de la Recherche Scientifique
75016 Paris (FR)**
• **Institut d'Optique Graduate School
91127 Palaiseau (FR)**

• **Université de Bordeaux
33000 Bordeaux (FR)**

(72) Inventeurs:
• **AGUILAR, Alberto
33000 BORDEAUX (FR)**
• **BON, Pierre
33140 Villenave d'Ornon (FR)**

(74) Mandataire: **Marks & Clerk France
Immeuble "Visium"
22, avenue Aristide Briand
94117 Arcueil Cedex (FR)**

(54) **MICROSCOPE CONFOCAL AVEC RÉALLOCATION DE PHOTONS**

(57) L'invention concerne un microscope confocal à balayage avec réallocation de photons configuré pour un fonctionnement en imagerie cohérente (réflectance ou transmission) et présentant un sténopé confocal dont le diamètre est compris entre 2 et 4 unités d'Airy. Elle concerne également l'utilisation d'un tel microscope pour l'observation de particules virales en suspension.

Fig. 1

EP 4 012 476 A1

**Description**

L'invention relève du domaine de la microscopie optique.

La microscopie optique joue un rôle essentiel en biologie car elle permet d'observer des échantillons vivants à un débit élevé contrairement, par exemple, à la microscopie électronique qui nécessite des opérations de préparation complexes et incompatibles avec la préservation de la vie. Cependant, son pouvoir de résolution est nécessairement limité par la diffraction de la lumière. Conformément à la théorie de Abbe, pour un microscope optique conventionnel la résolution maximale d est donnée par

$$d = \frac{\lambda}{2\,ON}$$

où $\lambda$ est la longueur d'onde de la lumière utilisée (entre 380 nm et 780 nm pour la lumière visible) et ON l'ouverture numérique qui peut difficilement dépasser une valeur de 1,4 pour des échantillons biologiques. Il s'ensuit que la résolution en lumière visible ne peut pas dépasser 135 nm, ce qui ne convient pas pour l'observation de très petites structures telles des particules virales.

Des techniques dites de « superrésolution » permettent de dépasser la limite de résolution de Abbe en exploitant des marqueurs fluorescents et/ou des effets non-linéaires. Ces techniques sont complexes à mettre en œuvre.

Par ailleurs, comme les objets biologiques sont par nature tridimensionnels, il est également nécessaire d'obtenir une résolution spatiale élevée dans une direction axiale (la limite de Abbe concerne la résolution latérale, dans un plan perpendiculaire à l'axe optique). La microscopie confocale permet d'obtenir des images avec une très faible profondeur de champ (de l'ordre de quelques centaines de nanomètre), et donc de réaliser un « sectionnement » de l'échantillon permettant d'accéder à sa structure tridimensionnelle. Cette technique est le plus souvent associée à l'utilisation de marqueurs fluorescents, mais il est également possible de l'utiliser en réflectance, sans marqueurs.

Un microscope confocal utilise une source d'illumination ponctuelle, dont une image est projetée sur l'échantillon à observer au moyen d'un objectif. La lumière issue de l'échantillon (lumière rétrodiffusée dans le cas d'un microscope confocal à réflectance ; émission fluorescente lorsqu'un marqueur fluorescent est utilisé) est focalisée sur un sténopé optiquement conjugué à la source ponctuelle, puis détectée par exemple au moyen d'un photomultiplicateur. La fonction du sténopé est de supprimer le rayonnement qui ne provient pas du plan focal de l'objectif, réalisant ainsi le sectionnement optique. Une image de l'échantillon est obtenue point par point, par balayage. Plus précisément, un balayage bidimensionnel, dans les deux directions perpendiculaires à l'axe optique, permet d'obtenir une image d'une tranche de l'échantillon centrée autour du plan focal de l'objectif. En y ajoutant un balayage axial de ce plan focal on obtient une image tridimensionnelle.

L'épaisseur de la tranche est d'autant plus petite, et donc la résolution axiale est d'autant meilleure, que le diamètre du sténopé est petit, mais le gain est faible lorsqu'on descend au-dessous de 1 unité d'Airy (UA). L'unité de Airy est le diamètre de la tache d'Airy du microscope, et vaut $\frac{\lambda}{2\,ON}$.

La microscopie confocale permet un gain de résolution latérale, par rapport à la limite de Abbe, pouvant aller en théorie jusqu'à 30%, en utilisant un sténopé de diamètre inférieur à 1 UA. Cependant cela est obtenu au prix d'une dégradation de l'écart signal à bruit.

La technique de réallocation de photons, proposée pour la première fois dans (Sheppard 1988) permet d'améliorer la résolution latérale d'un microscope confocal d'un facteur 2 en principe. L'idée à la base de cette technique est de remplacer le photomultiplicateur, ou plus généralement le détecteur de rayonnement ponctuel, par un détecteur matriciel qui permet d'acquérir une image élémentaire pour chaque point d'acquisition. L'image est ensuite redimensionnée (idéalement, réduite d'un facteur 2) par des moyens numériques ou optiques avant de passer au point de balayage suivant. L'image finale est obtenue en intégrant les différentes images de balayages acquises successivement, chacune décalée d'un pas de balayage par rapport à l'image précédente.

Une mise en œuvre purement optique de la technique de réallocation de photons est décrite dans (York 2013), (De Luca 2013) et (Curd 2015). Elle consiste à appliquer au faisceau d'illumination un premier balayage angulaire, appliquer un balayage angulaire inverse au faisceau issu de l'échantillon, puis appliquer à ce même faisceau issu de l'échantillon un deuxième balayage angulaire, synchronisé avec le premier balayage. Le deuxième balayage angulaire présente une amplitude normalisée par rapport à la section du faisceau plus grande, idéalement d'un facteur deux, que le premier balayage. « Normalisée par rapport à la section du faisceau » signifie que si $\alpha$ est le rapport entre l'amplitude du second balayage angulaire et celle du premier balayage angulaire et M le rapport entre la section du faisceau issu de l'échantillon et celle du faisceau d'éclairage, c'est la grandeur $\alpha/M$ qui doit être supérieure à 1 et idéalement égale à 2.

Comme en microscopie confocale classique, il est possible de paralléliser l'acquisition en utilisant une matrice de sténopés et des matrices de microlentilles voir par exemple l'article précité (York 2013).

La réallocation de photons a été appliquée en particulier à la microscopie confocale de fluorescence, voir par exemple les articles précités (York 2013), (De Luca 2013) et (Curd 2015), où un gain en résolution latérale d'un facteur 1,5 a été constaté. A la connaissance de l'inventeur, la seule application en réflectance de la réallocation de photons a été décrite dans (DuBose 2019). Dans cet article il n'était cependant pas question d'un microscope, mais d'un ophtalmoscope, dans lequel l'objectif est remplacé par le cristallin de l'œil d'un patient, présentant donc une faible ouverture numérique, et par conséquent une résolution de l'ordre des dizaines de micromètres.

L'invention vise à procurer un microscope confocal à balayage présentant une résolution améliorée en trois dimensions (latérale et axiale). Conformément à l'invention, ce but est atteint grâce à l'utilisation, en imagerie cohérente, d'un sténopé confocal présentant un diamètre (ou, plus généralement, une plus grande dimension latérale) compris entre 2 et 4 unités d'Airy, et idéalement égal à 3 unités d'Airy. Le présent inventeur s'est rendu compte que, dans un fonctionnement en imagerie cohérente, la résolution latérale augmente avec l'ouverture du sténopé jusqu'à doubler par rapport à la limite de Abbe pour un diamètre de 3 unités d'Airy. Par contre, dans un fonctionnement en fluorescence, la résolution latérale est indépendante du diamètre du sténopé. Par imagerie cohérente on entend un régime dans lequel les photons détectés sont des photons d'éclairage qui n'ont subi que des diffusions élastiques par l'échantillon et les systèmes optiques du microscope ; il peut s'agit par exemple d'imagerie à réflectance (cas considéré en détail dans la suite) ou à transmission. L'imagerie par fluorescence ou diffusion Raman, par contre, est considérée incohérente car les photons d'illumination subissent des diffusions inélastiques.

L'utilisation d'un sténopé de diamètre égal à 3 unités d'Airy optimise en outre le rejet du fond (qui est toutefois dégradé d'environ 30% par rapport au cas d'un microscope confocal sens réallocation de photons et avec un sténopé de 1 UA). La notion de « rejet de fond » est définie précisément dans (Sandison 1995).

Par ailleurs, l'inventeur a découvert que, dans ces conditions, la résolution axiale est augmentée d'un facteur 1,5 par rapport au cas d'un microscope confocal conventionnel.

Au final, en utilisant un éclairage de longueur d'onde égale à 445 nm et on objectif à immersion avec ON=1,3 il est possible d'obtenir une résolution spatiale de $(86 \times 86 \times 248)$ nm$^3$. Et cela sans besoin de marquage fluorescent, ce qui rend l'application de la technique plus simple et plus générale.

Un objet de l'invention est donc un microscope confocal à balayage avec réallocation de photons comprenant :

Une source de lumière configurée pour générer au moins un faisceau lumineux d'éclairage spatialement cohérent à une longueur d'onde d'éclairage ;

Un premier système optique configuré pour appliquer un balayage angulaire audit faisceau lumineux d'éclairage ;

Au moins un objectif de microscope configuré pour recevoir en entrée le faisceau lumineux d'éclairage en sortie du premier système optique et le focaliser sur un échantillon, et pour collecter et collimater un faisceau lumineux diffusé élastiquement par ledit échantillon, dit faisceau de signal ;

Un deuxième système optique, pouvant coïncider en tout ou en partie avec le premier système optique, configuré pour recevoir en entrée le faisceau signal collimaté par l'objectif de microscope, lui appliquer un balayage angulaire opposé à celui appliqué au faisceau lumineux d'éclairage et le focaliser dans un premier plan focal ;

Un sténopé agencé dans ledit premier plan focal ;

Un troisième système optique configuré pour collecter le faisceau signal ayant traversé le sténopé, le collimater et lui appliquer un balayage angulaire synchronisé avec celui appliqué au faisceau lumineux d'éclairage et tel que le produit de son amplitude par la section du faisceau lumineux collimaté dans le troisième système optique est plus grand que le produit de l'amplitude du balayage appliqué par le deuxième système optique par la section du faisceau lumineux collimaté dans le deuxième système optique, et le focaliser dans un deuxième plan focal ; et

Un capteur matriciel d'images agencé dans le deuxième plan focal ; caractérisé en ce que :

L'ensemble constitué par l'objectif de microscope, le deuxième système optique et le troisième système optique est configuré pour focaliser sur le capteur matriciel d'images ledit faisceau signal à la longueur d'onde d'éclairage ; et en ce que

Le sténopé présente un diamètre, ou une plus grande dimension latérale, compris entre 2 et 4 unités d'Airy.

Selon des modes de réalisation particuliers d'un tel microscope confocal à balayage :

-   Au moins le deuxième système optique peut comprendre une lame séparatrice pour séparer le faisceau signal du faisceau lumineux d'éclairage.

-   La source de lumière peut être adaptée pour émettre un faisceau lumineux d'éclairage bleu, violet ou dans l'ultraviolet proche.

- La source de lumière peut être un laser.

- L'objectif de microscope peut être un objectif à immersion présentent une ouverture numérique supérieure ou égale à 1.

- Le troisième système optique peut être configuré pour appliquer au faisceau signal un balayage angulaire tel que l'amplitude dudit balayage multipliée par la section du faisceau est comprise entre 1,8 et 2,2 fois le produit de l'amplitude du balayage angulaire appliqué au faisceau lumineux d'éclairage par le premier système optique par la section dudit faisceau.

- Le microscope confocal à balayage peut être configuré pour un fonctionnement en réflectance et :

  - Le premier système optique peut comprendre une première lentille pour focaliser le faisceau lumineux d'éclairage, un sténopé agencé dans le plan focal de ladite première lentille pour effectuer un filtrage spatial du faisceau lumineux d'éclairage, une lame séparatrice pour réfléchir une portion dudit faisceau, une deuxième lentille pour collimater ladite portion du faisceau d'éclairage, un premier miroir oscillant ou système de miroirs oscillants pour lui appliquer ledit balayage angulaire et un système afocal comprenant une troisième et une quatrième lentille ;
  - Le deuxième système optique peut comprendre ledit système afocal, ledit premier miroir oscillant ou système de miroirs oscillants, ladite deuxième lentille et ladite lame séparatrice, cette dernière étant configurée pour transmettre une portion du faisceau signal, rétrodiffusé par l'échantillon ; et
  - Le troisième système optique peut comprendre une cinquième lentille pour collimater le faisceau signal ayant traversé le sténopé, un deuxième miroir oscillant ou système de miroirs oscillants pour lui appliquer ledit balayage angulaire synchronisé avec celui appliqué au faisceau lumineux d'éclairage et une sixième lentille pour le focaliser dans le deuxième plan focal.

- La source de lumière peut être configurée pour générer une pluralité de dits faisceaux lumineux d'éclairage en parallèle se propageant à travers du premier système optique, moyennant quoi l'objectif de microscope collecte une pluralité de faisceaux signaux respectifs, qui se propageant ensuite le long dudit deuxième système optique, et comprenant une matrice de sténopés agencés dans ledit deuxième plan focal, un pour chaque dit faisceau lumineux rétrodiffusé.

Dans ce cas, le microscope confocal à balayage peut être configuré pour un fonctionnement en réflectance et :

- La source de lumière peut comprendre un premier réseau de microlentilles pour générer et focaliser ladite pluralité de faisceaux lumineux d'éclairage ;
- Le microscope confocal à balayage peut comprendre au moins un miroir oscillant présentant une face avant et une face arrière réfléchissantes, la face avant faisant partie du premier et du deuxième système optique et la face arrière faisant partie du troisième système optique ; et
- Le troisième système optique peut comprendre un second réseau de microlentilles pour augmenter la section des faisceaux lumineux rétrodiffusés incidents sur la face arrière du miroir oscillant d'un facteur compris entre 1,8 et 2,2.

Un autre objet de l'invention est l'utilisation d'un tel microscope confocal à balayage pour l'observation de particules virales en suspension.

Encore un autre objet de l'invention est un procédé d'observation d'un échantillon comprenant les étapes consistant à :

- Générer au moins un faisceau lumineux d'éclairage spatialement cohérent et collimaté à une longueur d'onde d'éclairage ;
- Lui appliquer un balayage angulaire ;
- Le focaliser sur l'échantillon au moyen d'un objectif de microscope ;
- Collecter, au moyen dudit ou d'un autre objectif de microscope, un faisceau lumineux diffusé élastiquement par l'échantillon à ladite longueur d'onde d'éclairage, dit faisceau signal ;
- Appliquer au faisceau signal un balayage angulaire opposé à celui appliqué au faisceau lumineux d'éclairage et le focaliser dans un premier plan focal ;
- Effectuer un filtrage spatial du faisceau signal au moyen d'un sténopé agencé dans ledit premier plan focal, le sténopé présentant un diamètre, ou une plus grande dimension latérale, compris entre 2 et 4 unités d'Airy ;
- Collecter le faisceau signal ayant traversé le sténopé, le collimater et lui appliquer un balayage angulaire synchronisé avec celui appliqué au faisceau lumineux d'éclairage et tel que le produit de son amplitude par la section du faisceau de signal est plus grand que le produit de l'amplitude du balayage angulaire appliqué au faisceau lumineux d'éclairage par son diamètre et le focaliser dans un deuxième plan focal ; et
- Détecter le faisceau signal au moyen d'un capteur matriciel d'images agencé dans le deuxième plan focal.

D'autres caractéristiques, détails et avantages de l'invention ressortiront à la lecture de la description faite en référence aux figures annexées donnés à titre d'exemple et qui représentent, respectivement :

[Fig. 1 ], un schéma d'un microscope confocal avec réallocation de photons selon un premier mode de réalisation de l'invention ;
[Fig. 2], des graphiques illustrant comment les performances du microscope confocal de la [Fig. 1] dépendent du diamètre du sténopé confocal ;
[Fig. 3],

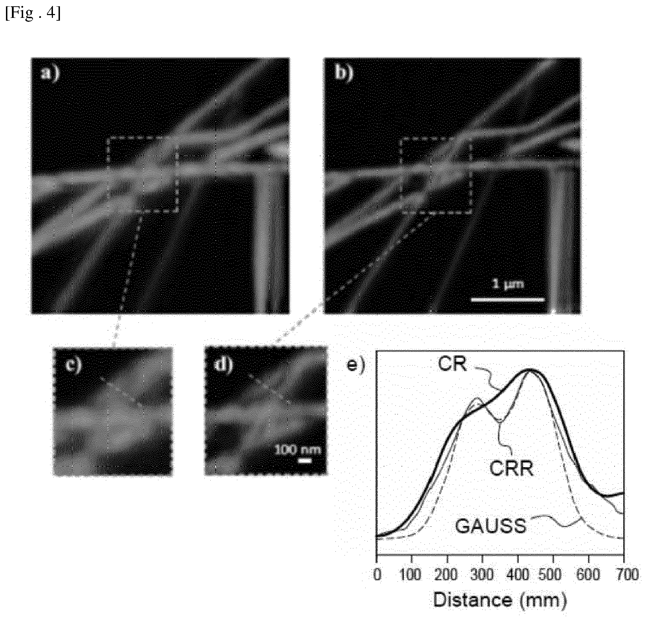

[Fig. 4] et

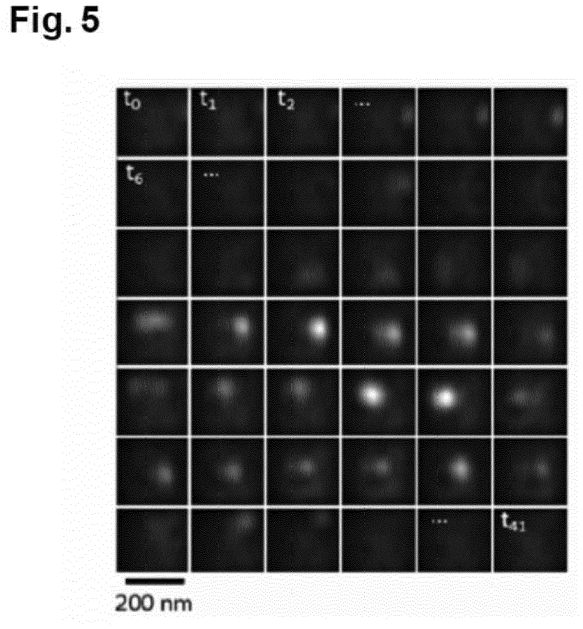

[Fig. 5], des résultats expérimentaux démontrant l'effet technique de l'invention; et

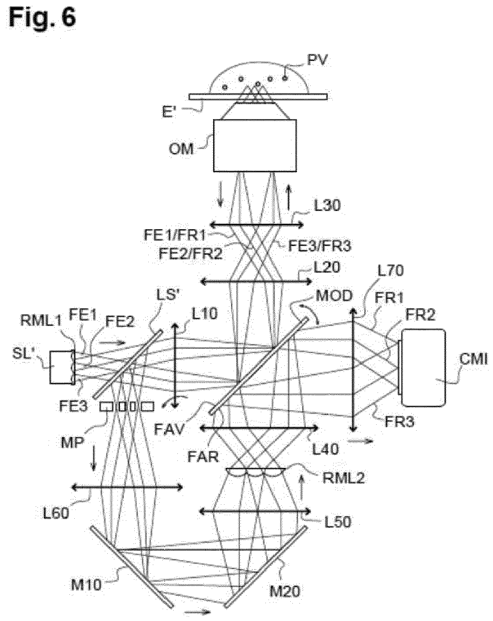

[Fig. 6], un schéma d'un microscope confocal avec réallocation de photons selon un second mode de réalisation de l'invention.

Comme expliqué plus haut, la technique de réallocation de photons consiste à enregistrer l'image d'un échantillon à travers un sténopé (« pinhole » en anglais) lorsque l'échantillon est illuminé par un faisceau lumineux très focalisé. Cette image prise à travers le sténopé est positionnée à un endroit spécifique d'une caméra d'acquisition avec une séparation entre deux points du balayage de l'échantillon $s$ et une dé-magnification M. Le signal enregistré par la caméra $I(\vec{x_s}, \vec{x_d})$, où $\vec{x_s}$ représente les coordonnées dans le plan de l'échantillon et $\vec{x_d}$ les coordonnées dans le plan du détecteur, est donné par

$$I(\vec{x_s}, \vec{x_d}) = \iint H_e\left(\vec{x'}\right) U(\vec{x'} - \vec{x_s}) H_d(\vec{x'} - \vec{x_d}) d^2\vec{x'} \qquad (1)$$

où $H_e$ est la fonction d'étalement d'illumination (ou excitation), $H_d$ la fonction d'étalement de détection et U le champ diffusé par l'échantillon.

L'équation (1) présuppose un balayage par déplacement de l'échantillon, alors qu'il est plus pratique de maintenir l'échantillon fixe et déplacer le faisceau d'illumination. Mathématiquement cela correspond au changement de coordonnées $\vec{x_s} = -\vec{x_1}$, $\vec{x_d} = \vec{x_2} - \vec{x_1}$, $\vec{x'} = \vec{x} - \vec{x_1}$, ce qui donne

$$I(\vec{x_1}, \vec{x_2}) = \iint H_e(\vec{x} - \vec{x_1}) H_d(\vec{x} - \vec{x_2}) U(\vec{x}) d^2\vec{x} \qquad (2)$$

Si le détecteur est suffisamment étendu par rapport à la taille du sténopé, il est possible de négliger le facteur de pondération de ce dernier. Si on introduit par ailleurs un facteur de démagnification M on peut écrire $\vec{x_r} = (1 - M)\vec{x_1} - M\vec{x_2}$ et (2) devient

$$I(\vec{x_r}) = \iint \iint H_e(\vec{x} - \vec{x_r} - M\vec{x_d}) H_d(\vec{x} - \vec{x_r} - (M-1)\vec{x_d}) U(\vec{x}) d^2\vec{x} d^2\vec{x_d} \qquad (3)$$

La fonction de transfert optique du système, $C(\vec{k})$, $\vec{k}$ désignant les coordonnées de fréquence spatiale, peut être écrite :

$$C(\vec{k}) = C_e\big[(M-1)\vec{k}\big] C_d\big[M\vec{k}\big] \qquad (4)$$

avec $C_e$, $C_d$ les fonctions de transfert optiques d'illumination et détection, respectivement. Idéalement $C_e(\vec{k}) = C_e(\vec{k}) =$

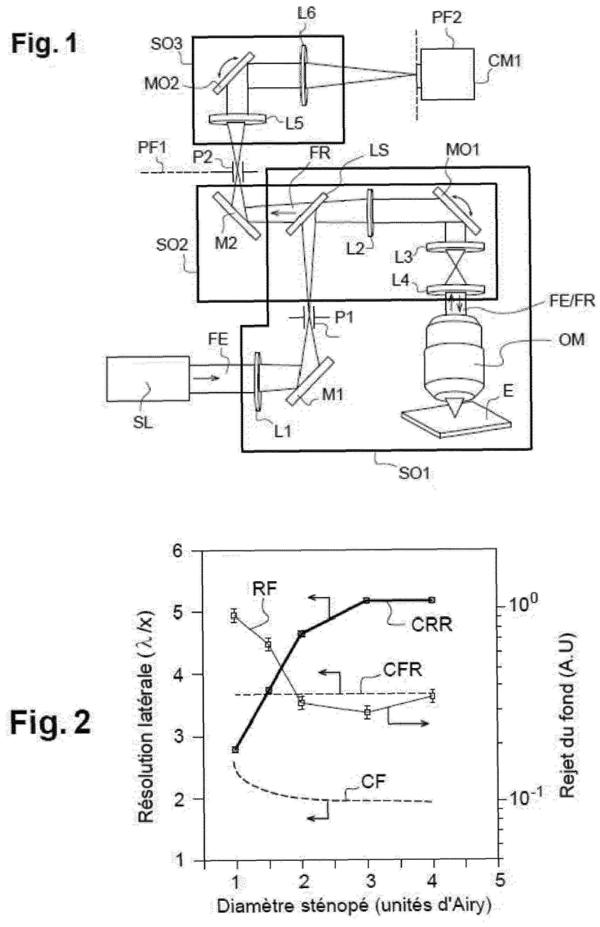

1 si $0 < k \leq k_0 = \frac{2\pi}{\lambda}$, ,0 autrement. On remarque que le support de $C_e(\vec{k})$ présente un rayon proportionnel à 1/(M-1). Il a été démontré dans (Sheppard 1988) et (DuBose 2019) que la fréquence de coupure maximale de la fonction de transfert optique prend sa valeur maximale $k_{max} = 2k_0$ pour M=1/2, ce qui correspond à une magnification d'un facteur 2, conduisant à un doublement de la résolution par rapport à la microscopie confocale classique. Cette magnification peut être obtenue par un re-balayage d'amplitude égale à 2 fois celle qui serait nécessaire pour compenser le balayage de l'échantillon par la tache d'éclairage. En variante, le re-balayage pourrait avoir une amplitude égale à celle nécessaire pour compenser le balayage de l'échantillon par la tache d'éclairage, la magnification étant fournie par un système de lentilles. Comme cela sera discuté plus loin en référence à la figure 2, des solutions intermédiaires sont également possibles ; plus généralement, ce qui compte est que le produit entre l'amplitude du re-balayage par rapport à celle du balayage d'illumination et la magnification optique soit approximativement égal à 2.

D'une manière générale, un microscope confocal avec réallocation de photons selon l'invention comprend : une source lumineuse ; un premier système optique coopérant avec la source lumineuse un objectif pour balayer la surface d'un échantillon avec un faisceau lumineux focalisé ; un deuxième système optique pour recueillir la lumière rétrodiffusée ou transmise par l'échantillon, compenser la déflexion angulaire introduite pour effectuer le balayage et la focaliser ; un sténopé dans le plan focal du deuxième système optique pour réaliser un filtrage confocal ; un troisième système optique pour appliquer un « re-balayage » au faisceau lumineux issu du sténopé et le focaliser sur une caméra. Les différents systèmes optiques peuvent coïncider en partie, ce qui permet de limiter le nombre de composants optiques.

La [Fig. 1] montre le schéma optique d'un microscope confocal avec réallocation de photons selon un premier mode de réalisation de l'invention.

La source de lumière SL est un laser émettant un faisceau lumineux FE (faisceau d'éclairage) de longueur d'onde λ=445 nm. Le faisceau FE est focalisé par une première lentille convergente L1 (longueur focale 200 mm) et purifié spatialement par un premier sténopé P1 avec un diamètre de 50 μm situé dans le plan focal de la lentille.

Le faisceau d'éclairage FE filtré spatialement est réfléchi par une lame séparatrice LS (transmission 50% - réflexion 50%) et collimaté par une deuxième lentille convergente L2 (longueur focale 200 mm). Un premier système de deux miroirs oscillants (un seul, MO1, est représenté dans un souci de simplicité), par exemple de type galvanomètre, impartit au faisceau FE une déflexion variable dans le temps, réalisant un balayage en deux dimensions. Le faisceau FE ainsi défléchi est focalisé sur un échantillon E par un objectif de microscope OM (objectif apochomatique à immersion dans huile de silicone, magnification 60x, ouverture numérique ON=1,3) de telle sorte que la tâche focale - dont le diamètre est limité par diffraction - balaye la surface de l'échantillon. Si l'échantillon est transparent ou semi-transparent, le point de focalisation peut être situé en dessous de la surface, à une profondeur qui peut être variée en déplaçant axialement l'objectif ou l'échantillon, ce qui permet l'obtention d'images tridimensionnelles par tomographie.

Un système afocal constitué des lentilles convergentes L3, L4 assure une relation de conjugaison optique entre la pupille de l'objectif et le point milieu des deux miroirs oscillants (ou le miroir oscillant unique MO1) ; typiquement, la distance entre les deux miroirs oscillants peut être négligée par rapport à la longueur focale de L3. Tous les composants optiques compris entre la lentille L1 et l'objectif OM - y compris un miroir M1, non essentiel, qui dévie le faisceau FE en amont du sténopé P1 pour rendre le dispositif plus compact - forment un premier système optique, ou système optique d'éclairage, SO1.

La lumière rétrodiffusée par l'échantillon est collectée par l'objectif OM qui forme un faisceau de signal FR se propageant suivant - à rebours - le même chemin optique que le faisceau d'éclairage jusqu'à la lame séparatrice LS. Ce chemin optique inclut la paire de miroirs oscillants MO1 qui compense la déflexion variable dans le temps impartie au faisceau d'éclairage pour balayer l'échantillon. La composante de FR qui traverse la lame LS est perdue, celle qui la traverse est destinée à être détectée et est réfléchie à 90° par un miroir M2 (non essentiel, visant uniquement à rendre le montage plus compact). L'ensemble L4, L3, MO1, L2, LS, M2 forme un deuxième système optique, ou système optique de collecte, SO2. On remarque que SO2 coïncide en partie avec SO1 car le microscope fonctionne en réflectance.

La lentille L2 a une double fonction : collimater le faisceau d'éclairage, qui diverge après avoir été focalisé par L1 et filtré spatialement par P1, et focaliser le faisceau signal FR qui sort collimaté de l'objectif OM et du système afocal L3, L4. Un deuxième sténopé P2 est placé dans le plan focal PF1 de la lentille L2 où le faisceau signal FR est focalisé. Contrairement au sténopé P1, P2 est une caractéristique essentielle de l'invention et le dimensionnement de son diamètre (ou, plus généralement, de sa plus grande dimension latérale, au cas où il ne serait pas circulaire) impacte fortement les performances du microscope. Cela sera discuté en détail plus loin à l'aide de la [Fig. 2].

Il est important de souligner que la figure n'est pas à l'échelle. En réalité, la distance entre le système de miroirs oscillants LO1 et L3 doit être égale à la distance entre L3 et le plan focal PF1. Par ailleurs, les lentilles L2 et L5 forment un second système afocal qui, dans le mode de réalisation de la [Fig. 1], présente un grossissement unitaire.

Le faisceau FR ayant traversé le sténopé P2, divergeant, est collimaté par une lentille convergente L5 (longueur focale 200 mm) et dirigé vers un second système de deux miroirs oscillants (un seul, MO2, est représenté dans un souci de simplicité), par exemple de type galvanomètre. Ce deuxième système de miroirs oscillants impartit au faisceau FR une déflexion variable dans le temps, réalisant un balayage en deux dimensions à l'origine de la réallocation des photons. Cette déflexion est synchrone de celle impartie au faisceau FR et présente une amplitude $\alpha_2$ supérieure à l'amplitude $\alpha_1$ de la déflexion impartie par MO1.

Plus précisément, la déflexion impartie par le second système de miroirs oscillants MO2 est idéalement supérieure d'un facteur égal à 2 (ou plus généralement compris entre 1,8 et 2,2) à celle imparti par le premier système de miroirs oscillants MO1.

D'une manière plus générale, le grossissement du système afocal L2 - L5 peut prendre une valeur G différente de 1, auquel cas la section du faisceau FR lorsqu'il est incident sur MO2 est supérieure d'un facteur M de la section du même faisceau lorsqu'il est incident sur MO1.Dans ce cas, c'est le produit $M\alpha_2$ qui doit être supérieur, et idéalement double, de $\alpha_1$.

Le faisceau défléchi par le système de miroirs oscillants MO2 est focalisé par une lentille convergente L6 (longueur focale 200 mm) dans un deuxième plan focal PF2.

L'ensemble L5, MO2, L6 forme un troisième système optique, ou système optique de réallocation de photons, SO3.

Un capteur matriciel d'images CMI est agencé dans le plan focal PF2 de la lentille L6. Son temps d'intégration est supérieur ou égal à une demi-période de balayage du système de miroirs oscillants MO2, ce qui permet de calculer de manière analogique les intégrales de l'équation (3). En variante, le temps d'intégration peut être inférieur, et la cadence d'acquisition d'images plus élevée, mais dans ce cas il est nécessaire de réaliser une intégration numérique après l'acquisition.

La [Fig. 2] illustre la dépendance des performances du microscope de la [Fig. 1] (mais la validité des résultats est plus générale) du diamètre du sténopé P2, et permet de les comparer à celles obtenues au moyen d'autres techniques de microscopie confocale. Le diamètre de P2 est exprimé en unités d'Airy UA. Comme expliqué plus haut, l'unité de Airy est le diamètre de la tache d'Airy du microscope, et vaut $\frac{\lambda}{2\,ON}$, ON étant l'ouverture numérique de l'objectif OM et $\lambda$ la longueur d'onde considérée.

Les courbes CRR, CFR et CF représentent, respectivement, la résolution latérale du microscope de la [Fig. 1], d'un microscope confocal à réallocation de photons incohérent (par exemple, à fluorescence) et d'un microscope confocal conventionnel. Plus précisément, les courbes montrent comment le paramètre « x » dépend du diamètre du sténopé, « x » étant tel que la résolution latérale est donné *par* $\frac{\lambda}{x}$ -. On remarque que :

- Dans le cas d'un microscope confocal classique (courbe CF), x augmente lorsque le diamètre du sténopé diminue ; pour cette raison, on choisit généralement un sténopé dont le diamètre vaut environ 1 UA.
- Dans le cas d'un microscope confocal incohérent à réallocation de photons (courbe CFR) la résolution latérale est indépendante du diamètre du sténopé et est meilleure d'un facteur 1,5 environ à celle du microscope confocal classique.
- Dans le cas d'un microscope confocal cohérent à réallocation de photons, selon l'invention (courbe CRR), la résolution s'améliore lorsque le diamètre du sténopé augmente, jusqu'à plafonner lors que ledit diamètre atteint 3 UA. A partir de 2 UA environ, la résolution est significativement meilleure qu'en microscopie cohérente. En conditions optimales (3UA), la résolution est deux fois meilleure qu'en microscopie confocale classique.

La courbe RF illustre la variation du rejet du fond en fonction du diamètre du sténopé (cette variation est la même dans les trois techniques considérées ci-dessus. Le rejet du fond baisse entre 1 et 2 UA, puis se stabilise entre 2 et 4 UA à une valeur inférieure d'environ 30% à celle obtenue pour un diamètre de 1 UA, avant de baisser fortement au-delà de 4 UA (non représenté). La légère remontée entre 3 et 4 UA est vraisemblablement un artefact.

En conclusion, pour des diamètres de sténopé compris entre 2 et 4 UA, l'invention permet d'obtenir un doublement de la résolution latérale par rapport à un microscope confocal sans réallocation de photons et un sténopé ouvert à 1 UA, au prix d'une dégradation contenue du rejet de fond.

L'amélioration de résolution obtenue grâce à l'invention a été démontrée expérimentalement.

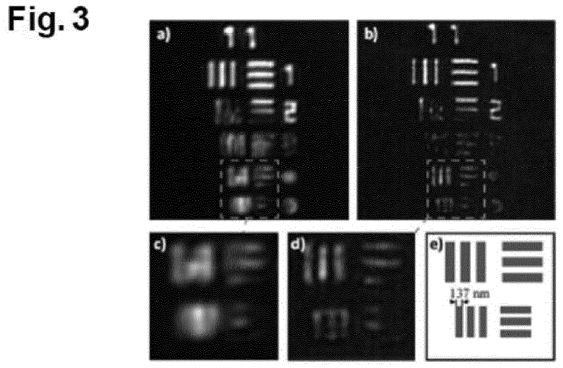

La [Fig. 3] montre des images d'une mire de résolution USAF (11e groupe d'éléments) acquises avec le microscope de la [Fig. 1] (panneaux b et d, ce dernier étant un agrandissement de la zone entourée par une ligne pointillée dans le panneau b) et avec un microscope confocal sans réallocation de photons utilisant la même source de lumière et le même objectif (panneaux a et c). Ces dernières sont beaucoup plus nettes. Le panneau d illustre le motif de la mire. Les images ont été obtenues sans déconvolution.

La [Fig. 4] montre des images de nanotiges d'argent (diamètre : 90 nm +/- 5 nm ; longueur : quelques dizaines de micromètres) immergées dans une huile d'accord d'indice de réfraction, acquises avec le microscope de la [Fig. 1] (panneaux b et d, ce dernier étant un agrandissement de la zone entourée par une ligne pointillée dans le panneau b) et avec un microscope confocal sans réallocation de photons utilisant la même source de lumière et le même objectif (panneaux a et c). Ces dernières sont beaucoup plus nettes. Le panneau d illustre les profils extraits des panneaux c et d le long des lignes pointillées : la courbe CRR correspond au panneau d et permet de distinguer deux nanotiges, qui ne sont pas résolues par la courbe CR correspondant au panneau c. La courbe GAUSS est un fit gaussien de CRR et permet d'estimer les diamètres des nanotiges : les largeurs à mi-hauteur des deux gaussiennes sont 92,6 nm et 91,2 nm, ce qui est cohérent avec les valeurs attendues.

Un microscope selon l'invention peut être utilisé, entre autres, pour détecter des virus. La [Fig. 5] montre des images de particules de silice d'environ 100 nm de diamètre - donc comparables à des particules virales tant en termes de diamètre que d'indice de réfraction - en diffusion libre dans une solution aqueuse. Les images ont été acquises au moyen d'un microscope du type de la [Fig. 1] mais avec éclairage à une longueur d'onde de 400 nm. Les différentes images correspondent à des instants successifs, espacés de 4 s. Le diamètre des particules, mesuré sur des images au point, est de 105 nm.

Le microscope de la [Fig. 1] présente un champ de vue limité - ou nécessite de temps d'acquisition longs - car il utilise un seul faisceau focalisé. La [Fig. 6] illustre un mode de réalisation alternatif qui permet de surmonter cette limitation par recours à une parallélisation massive. Ce montage utilise une matrice de microlentilles pour créer une série de points sources. Cela permet de paralléliser la mesure dans le plan de l'échantillon pour augmenter la vitesse (on ne scanne que la toute petite région entre 2 points de mesure) tout en conservant un large champ de vue. L'image de chacun des points sources est filtrée au moyen d'une matrice de trous de filtrage. Afin d'augmenter la résolution d'un facteur 2, chacun des points est soumis à un re-balayage avec une réduction d'un facteur 2 de sa taille au moyen d'une deuxième matrice de microlentilles. Cette approche permet une imagerie tendant vers le kHz sur des champs de vue d'au moins $50\text{x}50\mu m^2$ en parallélisant 50x50 points de mesure dans le champ (1 point de mesure confocal tous les 1 $\mu m$ dans l'échantillon) et une résolution meilleure que 100 nm tout en restant dans la gamme d'imagerie des longueurs d'onde visibles ou proche UV.

Plus précisément, l'appareil de la [Fig. 6] comprend une source de lumière SL' (par exemple, mais pas nécessairement un laser) équipée d'une première matrice de microlentilles RML1 qui génère une pluralité de faisceaux d'éclairage FE1, FE2, FE3 focalisés (seulement trois sont représentés, mais il s'agira typiquement d'une matrice bidimensionnelle de plusieurs centaines de faisceaux). Ces faisceaux traversent une lame séparatrice LS' puis, devenus divergents, sont refocalisés par une lentille convergent L10 sur la face avant FAV d'un miroir oscillant MOD réfléchissant sur ses deux faces ; il peut par exemple s'agir d'un miroir résonnant pour augmenter la vitesse de balayage afin de « figer » le mouvement des particules en suspension, dans le cas d'une application à la détection de virus. Le balayage dans l'autre direction est effectué avec une vitesse moindre, pour réaliser un trajet « en serpentin » du point focal ; il peut donc être obtenu au moyen d'un miroir galvanométrique également réfléchissant des 2 côtés (non représenté).

Les faisceaux réfléchis par les miroirs oscillants sont focalisés sur un échantillon E' (une goutte de solution aqueuse contenant en suspension des particules virales PV, déposée sur une lame de microscope) par un objectif de microscope OM (objectif apochomatique à immersion dans huile de silicone, magnification 60x, ouverture numérique ON=1,3) de telle sorte que la tâche focale - dont le diamètre est limité par diffraction - balaye la surface de l'échantillon. Un système afocal constitué des lentilles convergentes L20, L30 assure une relation de conjugaison optique entre la pupille de l'objectif et les miroirs oscillants.

Les faisceaux FR1, FR2, FR3 rétrodiffusés par l'échantillon E' traversent dans le sens opposé le système afocal L20, L30, sont réfléchis par la face avant FAV du miroir MOD pour compenser le balayage des faisceaux d'éclairage, sont refocalisés par la lentille L10 et réfléchis par la lame séparatrice LS'. Ils subissent ensuite un filtrage par une matrice de sténopés MP dont la fonction et le dimensionnement sont analogues à ceux du sténopé P2 de la [Fig. 1]. Deux lentilles convergentes L60, L50 formant un système afocal et deux miroirs M10, M20 (optionnels) permettent de diriger les faisceaux issus de la matrice de sténopés MP sur un second réseau de microlentilles convergentes RML2 qui focalisent les faisceaux en réduisant d'un facteur deux la taille de chaque point focal.. Après avoir traversé une autre lentille convergente L40, les faisceaux FR1 - FR3 sont réfléchis par la face arrière FAR du miroir résonnant MOD et par celle du miroir galvanométrique non représenté pour réaliser la réallocation de photons. L'effet combiné du système afocal L60, L50, de la lentille L40 et du réseau de microlentilles RML2 est de doubler la section de chaque faisceau signal au niveau du miroir résonnant MOD. Cela est nécessaire car l'amplitude du rebalayage est nécessairement égale à celle du balayage du faisceau d'éclairage.

Une dernière lentille convergente L70 focalise les faisceaux signaux sur le capteur matriciel d'image CMI. Le réseau de microlentilles RML2 a pour fonction de diviser par deux la section des points focaux des faisceaux signaux.

L'invention a été décrite en référence à deux modes de réalisation particuliers, mais elle ne s'y limite pas.

Par exemple, elle peut être adaptée au cas d'un microscope confocal à transmission. Dans ce cas il faut prévoir deux objectifs de microscope - un pour illuminer un point de l'échantillon et l'autre pour collecter la lumière transmise. En outre, le premier et le deuxième système optique doivent être complètement disjoints, ce qui nécessite plus de composants.

En général, le balayage de l'échantillon par le faisceau lumineux focalisé et le balayage de réallocation de photons seront bidimensionnels. Dans certains cas, cependant, un balayage dans une seule dimension pourra être suffisant, ce qui permettra de réduire le nombre de miroirs oscillants.

Le filtrage optique par la lentille L1 et le sténopé P1, ou par la matrice de microlentilles RML1 et la matrice de sténopés MP, n'est pas strictement nécessaire, pourvu que l'éclairage présente une cohérence spatiale suffisante (rapport de Strehl > 80%) ; dans le cas d'un système parallélisé tel que celui de la figure 6, la cohérence s'entend à l'échelle de chaque faisceau élémentaire tandis qu'une cohérence globale n'est pas requise. De même, les relais optiques L3-L4 et L20-L30 ne sont pas indispensables en principe, mais leur présence est généralement requise pour assurer que le miroir oscillant MO1 ou MOD soit optiquement conjugué avec la pupille de l'objectif faute de quoi, aux grandes angles de déflexion, la pupille de l'objectif n'est pas totalement éclairée ce qui réduit l'ouverture numérique et donc la résolution spatiale. De même, l'utilisation d'un laser en tant que source d'éclairage n'est pas essentielle.

Au moins certaines lentilles pourraient ne pas être convergentes mais divergentes et/ou être remplacées par d'autres dispositifs de focalisation ou défocalisation, par exemple des miroirs concaves ou convexes.

La lame séparatrice LS pourrait, en principe, être remplacée par un cube séparateur, mais cela est désavantageux à cause des réflexions parasites que ce dernier composant introduirait.

D'une manière plus générale, d'autres montages optiques que ceux illustrés par la [Fig. 1] et la [Fig. 6] peuvent être utilisés pour réaliser les différents systèmes optiques constituant un microscope selon l'invention. Dans la description des figures, en outre, le dimensionnement des éléments optiques est donné uniquement à titre d'exemple.

La longueur d'onde d'illumination peut être quelconque, mais l'utilisation d'une lumière verte (495-570 nm), bleu (450 - 495 nm) ou violette (380 - 450 nm), voire dans l'ultraviolet proche (300-380) est préférée car elle permet d'obtenir une résolution spatiale latérale de l'ordre de 100 nm ou moins tout en évitant les difficultés techniques associées à l'utilisation de plus petites longueurs d'onde. De même, le choix d'un objectif de microscope à immersion de forte ouverture numérique (supérieure ou égale à 1) permet de maximiser la résolution spatiale, mais n'est pas essentiel en soi.

Enfin, la détection et identification de particules virales ne constitue qu'un exemple d'application d'un microscope parallélisé du type illustré sur la [Fig. 6].

Références

(Sheppard 1988) : C. J. R. Sheppard, « Super-resolution in Confocal Imaging », Optik 80, No. 2, pages 53, 54.

(York 2013) : A.G. York et al. « Instant super-resolution imaging in live cells and embryos via analog image processing », Nat. Methods 2013, Novembre, 10(11), pages 1122 - 1126.

(De Luca 2013) : G. M.R. De Luca « Re-scan confocal microscopy : scanning twice for better resolution » Biomedical Optics Express, Vol. 4, No. 11, Novembre 2013.

(Curd 2015) : A. Curd et al. « Construction of an instant structured illumination microscope », Methods 88 (2015) pages 37 - 47.

(DuBose 2019) : T. B. DuBose et al. « Super-resolution retinal imaging using optically reassigned scanning laser ophtalmology », Nature Photonics, Vol. 13, Avril 2019, pages 257 - 262.

(Sandison 1995) : D. R. Sandison et al. « Quantitative comparison of background rejection, signal-to-noise ratio, and resolution in confocal and full-field laser scanning microscopes » Applied Optics Vol. 34, No. 19, 1er juillet 1995, pages 3576 - 3588.

## Revendications

1. Microscope confocal à balayage avec réallocation de photons comprenant :

Une source de lumière (SL) configurée pour générer au moins un faisceau lumineux d'éclairage (FE) spatialement cohérent à une longueur d'onde d'éclairage ;
Un premier système optique (SO1) configuré pour appliquer un balayage angulaire audit faisceau lumineux d'éclairage ;
Au moins un objectif de microscope (OM) configuré pour recevoir en entrée le faisceau lumineux d'éclairage en sortie du premier système optique et le focaliser sur un échantillon (E), et pour collecter et collimater un faisceau lumineux diffusé élastiquement (FR) par ledit échantillon, dit faisceau de signal ;
Un deuxième système optique (SO2), pouvant coïncider en tout ou en partie avec le premier système optique, configuré pour recevoir en entrée le faisceau signal collimaté par l'objectif de microscope, lui appliquer un balayage angulaire opposé à celui appliqué au faisceau lumineux d'éclairage et le focaliser dans un premier plan focal (PF1) ;
Un sténopé (P2) agencé dans ledit premier plan focal ;
Un troisième système optique (SO3) configuré pour collecter le faisceau signal ayant traversé le sténopé, le collimater et lui appliquer un balayage angulaire synchronisé avec celui appliqué au faisceau lumineux d'éclairage et tel que le produit de son amplitude par la section du faisceau lumineux collimaté dans le troisième système optique est plus grand que le produit de l'amplitude du balayage appliqué par le deuxième système optique par la section du faisceau lumineux collimaté dans le deuxième système optique, et le focaliser dans un deuxième plan focal ; et
Un capteur matriciel d'images (CMI) agencé dans le deuxième plan focal (PF2) ;

**caractérisé en ce que** :

L'ensemble constitué par l'objectif de microscope, le deuxième système optique et le troisième système optique est configuré pour focaliser sur le capteur matriciel d'images ledit faisceau signal à la longueur d'onde d'éclairage ; et **en ce que**
Le sténopé présente un diamètre, ou une plus grande dimension latérale, compris entre 2 et 4 unités d'Airy.

2. Microscope confocal à balayage selon la revendication 1 dans lequel au moins le deuxième système optique comprend une lame séparatrice (LS) pour séparer le faisceau signal du faisceau lumineux d'éclairage.

3. Microscope confocal à balayage selon l'une quelconque des revendications précédentes dans lequel la source de lumière (SL) est adaptée pour émettre un faisceau lumineux d'éclairage bleu, violet ou dans l'ultraviolet proche.

4. Microscope confocal à balayage selon l'une quelconque des revendications précédentes dans lequel la source de lumière (SL) est un laser.

5. Microscope confocal à balayage selon l'une quelconque des revendications précédentes dans lequel l'objectif de microscope (OM) est un objectif à immersion présentent une ouverture numérique supérieure ou égale à 1.

6. Microscope confocal à balayage selon l'une quelconque des revendications précédentes dans lequel le troisième système optique est configuré pour appliquer au faisceau signal un balayage angulaire tel que l'amplitude dudit balayage multipliée par la section du faisceau est comprise entre 1,8 et 2,2 fois le produit de l'amplitude du balayage angulaire appliqué au faisceau lumineux d'éclairage par le premier système optique par la section dudit faisceau.

7. Microscope confocal à balayage selon l'une quelconque des revendications précédentes, configuré pour un fonctionnement en réflectance, dans lequel :

   - Le premier système optique (SO1) comprend une première lentille (L1) pour focaliser le faisceau lumineux d'éclairage, un sténopé (P1) agencé dans le plan focal de ladite première lentille pour effectuer un filtrage spatial du faisceau lumineux d'éclairage, une lame séparatrice (LS) pour réfléchir une portion dudit faisceau, une deuxième lentille (L2) pour collimater ladite portion du faisceau d'éclairage, un premier miroir oscillant (MO1) ou système de miroirs oscillants pour lui appliquer ledit balayage angulaire et un système afocal comprenant une troisième (L3) et une quatrième (L4) lentille ;
   - Le deuxième système optique comprend ledit système afocal (L3, L4), ledit premier miroir oscillant (MO1) ou système de miroirs oscillants, ladite deuxième lentille (L2) et ladite lame séparatrice (LS), cette dernière étant configurée pour transmettre une portion du faisceau signal, rétrodiffusé par l'échantillon ; et
   - Le troisième système optique comprend une cinquième lentille (L5) pour collimater le faisceau signal ayant traversé le sténopé, un deuxième miroir oscillant (MO2) ou système de miroirs oscillants pour lui appliquer ledit balayage angulaire synchronisé avec celui appliqué au faisceau lumineux d'éclairage et une sixième lentille (L6) pour le focaliser dans le deuxième plan focal.

8. Microscope confocal à balayage selon l'une quelconque des revendications précédentes, dans lequel la source de lumière (SL') est configurée pour générer une pluralité de dits faisceaux lumineux d'éclairage en parallèle (FE1, FE2, FE3) se propageant à travers du premier système optique, moyennant quoi l'objectif de microscope collecte une pluralité de faisceaux signaux respectifs (FR1, FR2, FR3), qui se propageant ensuite le long dudit deuxième système optique, et comprenant une matrice de sténopés (MP) agencés dans ledit deuxième plan focal, un pour chaque dit faisceau lumineux rétrodiffusé.

9. Microscope confocal à balayage selon la revendication 8, configuré pour un fonctionnement en réflectance, dans lequel :

La source de lumière (SL') comprend un premier réseau de microlentilles (RML1) pour générer et focaliser ladite pluralité de faisceaux lumineux d'éclairage ;

Le microscope confocal à balayage comprend au moins un miroir oscillant (MOD) présentant une face avant (FAV) et une face arrière (FAR) réfléchissantes, la face avant faisant partie du premier et du deuxième système optique et la face arrière faisant partie du troisième système optique ; et

Le troisième système optique comprend un second réseau de microlentilles (RML2) pour augmenter la section des faisceaux lumineux rétrodiffusés incidents sur la face arrière du miroir oscillant d'un facteur compris entre 1,8 et 2,2.

10. Utilisation d'un microscope confocal à balayage selon l'une quelconque des revendications précédentes pour l'observation de particules virales (PV) en suspension.

11. Procédé d'observation d'un échantillon (E) comprenant les étapes consistant à :

Générer au moins un faisceau lumineux d'éclairage (FE) spatialement cohérent et collimaté à une longueur d'onde d'éclairage ;

Lui appliquer un balayage angulaire ;

Le focaliser sur l'échantillon (E) au moyen d'un objectif de microscope (OM) ;

Collecter, au moyen dudit ou d'un autre objectif de microscope, un faisceau lumineux diffusé élastiquement (FR) par l'échantillon à ladite longueur d'onde d'éclairage, dit faisceau signal ;

Appliquer au faisceau signal un balayage angulaire opposé à celui appliqué au faisceau lumineux d'éclairage et le focaliser dans un premier plan focal (PF1) ;

Effectuer un filtrage spatial du faisceau signal au moyen d'un sténopé (P2) agencé dans ledit premier plan focal, le sténopé présentant un diamètre, ou une plus grande dimension latérale, compris entre 2 et 4 unités d'Airy ;

Collecter le faisceau signal ayant traversé le sténopé, le collimater et lui appliquer un balayage angulaire synchronisé avec celui appliqué au faisceau lumineux d'éclairage et tel que le produit de son amplitude par la section du faisceau de signal est plus grand que le produit de l'amplitude du balayage angulaire appliqué au faisceau lumineux d'éclairage par son diamètre et le focaliser dans un deuxième plan focal (PF2) ; et

Détecter le faisceau signal au moyen d'un capteur matriciel d'images agencé dans le deuxième plan focal.

Fig. 1

Fig. 2

Fig. 3

[Fig . 4]

# Fig. 5

200 nm

Fig. 6

**Europäisches Patentamt**
**European Patent Office**
**Office européen des brevets**

# RAPPORT DE RECHERCHE EUROPEENNE

Numéro de la demande

EP 20 30 6540

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Roth Stephan: "Development of a new microscopy method: Optical Photon Reassignment Microscopy", 29 mars 2017 (2017-03-29), XP055800240, Extrait de l'Internet: URL:https://www.db-thueringen.de/servlets/MCRFileNodeServlet/dbt_derivate_00038924/ROTH_THESIS.pdf [extrait le 2021-04-30] | 1-8,10, 11 | INV. G02B21/00 G02B27/58 |
| Y | * section "4.2 Development of an idea"; section "4.4 Optical methods"; sectopm "5 Optical Photon Reassignment Microscopy"; figures 4.6, 5.7, 5.8, 5.9, 5.10, 5.13 * ----- | 9 | |
| A | Larocca Francesco: "Development of Multi-modal and Super-resolved Retinal Imaging Systems", 19 avril 2016 (2016-04-19), XP055800358, Extrait de l'Internet: URL:https://dukespace.lib.duke.edu/dspace/bitstream/handle/10161/12239/LaRocca_duke_0066D_13458.pdf?sequence=1 [extrait le 2021-04-30] * figure 46 * ----- | 1-11 | |
| A | DE 10 2013 005927 A1 (FRIEDRICH SCHILLER UNIVERSITÄT JENA [DE] ET AL.) 2 octobre 2014 (2014-10-02) * alinéa [0030]; figure 5 * ----- -/-- | 1-11 | |

**DOMAINES TECHNIQUES RECHERCHES (IPC)**

G02B

Le présent rapport a été établi pour toutes les revendications

| Lieu de la recherche | Date d'achèvement de la recherche | Examinateur |
|---|---|---|
| Munich | 30 avril 2021 | Kaiser, Peter |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 20 30 6540

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | YORK ANDREW G ET AL: "Instant super-resolution imaging in live cells and embryos via analog image processing", NATURE METHODS, vol. 10, no. 11, 1 novembre 2013 (2013-11-01), pages 1122-1126, XP055800399, New York ISSN: 1548-7091, DOI: 10.1038/nmeth.2687 | 8,9 | |
| A | * Supplementary Figure 1 * | 1-7,10, 11 | |
| | ----- | | |
| Y | WO 2018/226836 A1 (US HEALTH [US]; SHROFF HARI [US]; YORK ANDREW [US]) 13 décembre 2018 (2018-12-13) | 8,9 | |
| A | * alinéa [0032]; figure 3 * | 1-7,10, 11 | |
| | ----- | | |
| A | ROBERT WITTE ET AL: "Concepts in Light Microscopy of Viruses", VIRUSES, vol. 10, no. 4, 18 avril 2018 (2018-04-18), page 202, XP055529858, DOI: 10.3390/v10040202 * abrégé * | 10 | |
| | ----- | | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 30 avril 2021 | Kaiser, Peter |

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 20 30 6540

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-04-2021

| Document brevet cité au rapport de recherche | Date de publication | Membre(s) de la famille de brevet(s) | Date de publication |
|---|---|---|---|
| DE 102013005927 A1 | 02-10-2014 | AUCUN | |
| WO 2018226836 A1 | 13-12-2018 | CN 110023813 A<br>EP 3504574 A1<br>JP 2020525811 A<br>WO 2018226836 A1 | 16-07-2019<br>03-07-2019<br>27-08-2020<br>13-12-2018 |

EPO FORM P0460

Pour tout renseignement concernant cette annexe : voir Journal Officiel de l'Office européen des brevets, No.12/82

# EP 4 012 476 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **C. J. R. SHEPPARD.** Super-resolution in Confocal Imaging. *Optik,* vol. 80 (2), 53, , 54
- **A.G. YORK et al.** Instant super-resolution imaging in live cells and embryos via analog image processing. *Nat. Methods,* Novembre 2013, vol. 10 (11), 1122-1126
- **G. M.R. DE LUCA.** Re-scan confocal microscopy : scanning twice for better resolution. *Biomedical Optics Express,* Novembre 2013, vol. 4 (11
- **A. CURD et al.** Construction of an instant structured illumination microscope. *Methods,* 2015, vol. 88, 37-47
- **T. B. DUBOSE et al.** Super-resolution retinal imaging using optically reassigned scanning laser ophtalmology. *Nature Photonics,* Avril 2019, vol. 13, 257-262
- **D. R. SANDISON et al.** Quantitative comparison of background rejection, signal-to-noise ratio, and resolution in confocal and full-field laser scanning microscopes. *Applied Optics,* 01 Juillet 1995, vol. 34 (19), 3576-3588